(19) Europäisches Patentamt
European Patent Office
Office européen des brevets

(11) **EP 4 621 438 A1**

(12) **EUROPEAN PATENT APPLICATION**
published in accordance with Art. 153(4) EPC

(43) Date of publication:
**24.09.2025 Bulletin 2025/39**

(21) Application number: **23899840.5**

(22) Date of filing: **28.11.2023**

(51) International Patent Classification (IPC):
**G01S 13/10** (2006.01)    **G01S 13/02** (2006.01)
**H04W 72/0446** (2023.01)

(52) Cooperative Patent Classification (CPC):
**G01S 13/02; G01S 13/10; H04B 7/06; H04L 5/00;**
**H04L 27/26; H04W 72/0446**

(86) International application number:
**PCT/CN2023/134833**

(87) International publication number:
**WO 2024/120261 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2022 CN 202211584425**

(71) Applicant: **Huawei Technologies Co., Ltd.
Shenzhen, Guangdong 518129 (CN)**

(72) Inventors:
• **WANG, Zhonglong
Shenzhen, Guangdong 518129 (CN)**
• **XIE, Xinqian
Shenzhen, Guangdong 518129 (CN)**
• **SHAO, Jiafeng
Shenzhen, Guangdong 518129 (CN)**
• **YE, Wei
Shenzhen, Guangdong 518129 (CN)**
• **LI, Hantao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SIGNAL TRANSMISSION METHOD AND APPARATUS**

(57)    Embodiments of this application disclose a signal sending method, including: sending a plurality of reference signals, where initial values of the plurality of reference signals are the same, and a time domain interval between any two adjacent reference signals in the plurality of reference signals is less than one radio frame; and receiving echo signals of the plurality of reference signals. Because initial values of pseudo-random sequences of a plurality of reference signals sent by a network device are all the same, interfering signals received by the network device from another network device within coherent processing time remain substantially unchanged within the coherent processing time. Interfering signals present after Fourier transform are concentrated in a zero-velocity region of a range-velocity spectrum, reducing an extent of a sensing blind zone.

FIG. 5

**Description**

This application claims priority to Chinese Patent Application No. 202211584425.2, filed with the China National Intellectual Property Administration on December 9, 2022 and entitled "SIGNAL SENDING METHOD AND APPARATUS", which is incorporated herein by reference in its entirety.

TECHNICAL FIELD

This application relates to the field of communication technologies, and in particular, to a signal sending method and apparatus.

BACKGROUND

Integrated sensing and communication is a key technology for a next-generation wireless communication network, aims to integrate two functions, wireless communication and sensing, into a same system, and implements sensing functions, such as positioning, detection, imaging, and identification of a target, by using various propagation characteristics of radio signals, to obtain surrounding physical environment information, explore a communication capability, and improve user experience.

A network device performs sensing by sending a sensing signal and receiving an echo signal formed after the sensing signal is reflected by a target in an environment. A delay of the echo signal relative to the sent sensing signal shows a range from the target, and a Doppler frequency shift of the echo signal relative to the sent sensing signal shows a velocity of the target.

In addition, for a wireless communication system, a communication transmission channel dynamically changes. A network device and a terminal device need to measure and estimate the channel by using a reference signal. For example, a channel state information-reference signal (channel state information-reference signal, CSI-RS) and a demodulation reference signal (demodulation reference signal, DMRS) are two typical reference signals, which are used for channel measurement and data demodulation, respectively. Both of the signals are reference signals generated based on pseudo-random sequences. A generation sequence of the pseudo-random sequences is related to parameters such as a physical layer cell identity, a scrambling identity of a terminal device, and positions of time domain resources occupied by the reference signals.

In a case that the network device performs sensing by using a reference signal generated based on a pseudo-random sequence, how to design the reference signal to make the reference signal meet a sensing requirement is an urgent problem to be resolved.

SUMMARY

Embodiments of this application provide a signal sending method and apparatus, to resolve a problem of sensing blind zone that occurs in a sensing process.

According to a first aspect, a signal sending method is provided. The method may be performed by a network device, a chip, a readable storage medium, or a component or an apparatus that may be used in a network device. The signal sending method includes:

  sending a plurality of reference signals, where initial values of sequences of the plurality of reference signals are the same, and a time domain interval between any two adjacent reference signals in the plurality of reference signals is less than one radio frame; and
  receiving an echo signal of at least one of the plurality of reference signals.

In the signal sending method provided in this embodiment of this application, because initial values of pseudo-random sequences of a plurality of reference signals sent by a network device are all the same, interfering signals received by the network device from another network device within coherent processing time remain substantially unchanged within the coherent processing time. Interfering signals present after Fourier transform are concentrated in a zero-velocity region of a range-velocity spectrum, reducing an extent of a sensing blind zone.

In an optional implementation, an initial value of a pseudo-random sequence of the reference signal is determined based on a physical layer cell identity.

In an optional implementation, the initial value of the pseudo-random sequence of the reference signal satisfies:

$$c_{\text{init}} = \left(2^{10}\left(2N_{\text{ID}}^{\text{cell}} + 1\right) + N_{\text{ID}}^{\text{cell}}\right)\text{mod}2^{31},$$

where $c_{init}$ indicates the initial value, and $N_{ID}^{cell}$ is the physical layer cell identity.

In an optional implementation, an initial value of a pseudo-random sequence of the reference signal is determined based on at least a smallest time domain interval between the reference signals, where the smallest time domain interval is a smallest value of time domain intervals between adjacent reference signals in the plurality of reference signals.

In an optional implementation, the initial value of the pseudo-random sequence of the reference signal is

$$c_{init} = \left(2^{10}\left(\left(N_{symb}^{slot}n_{s,f}^{\mu} + l\right)\mod T + 1\right)\left(2N_{ID}^{cell} + 1\right) + N_{ID}^{cell}\right)\mod 2^{31}$$ , where $c_{init}$ indicates the initial

value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and $l$ is an index of an OFDM symbol for the reference signal in a slot.

In an optional implementation, the reference signal is a channel state information-reference signal.

In an optional implementation, the initial value of the pseudo-random sequence of the reference signal is

$$c_{init} = \left(2^{17}\left(\left(N_{symb}^{slot}n_{s,f}^{\mu} + l\right)\mod T + 1\right)\left(2N_{ID}^{cell} + 1\right) + 2N_{ID}^{cell}\right)\mod 2^{31}$$ , where $c_{init}$ indicates the

initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and $l$ is an index of an OFDM symbol for the reference signal in a slot.

In an optional implementation, the reference signal is a demodulation reference signal.

In an optional implementation, $N_{symb}^{slot}N_{s,f}^{\mu} \mod T = 0$ , where $N_{s,f}^{\mu}$ is a quantity of slots in a radio frame.

In an optional implementation, the plurality of reference signals occupy a plurality of symbols, indexes of the plurality of symbols belong to a first set, and the first set satisfies R={T×e+z|e∈S,S⊆{0,1,2,...}}, where R indicates the first set, T indicates the smallest time domain interval between the reference signals, z is an integer greater than or equal to 0, and S indicates a second set, where the second set is a subset of a natural number set.

The reference signal is mapped to time-frequency resources in a first format, and positions of the time-frequency resources in the first format are {$(k_0, l_0)$, $(k_0 + 2, l_0)$, $(k_0 + 4, l_0)$, $(k_0 + 6, l_0)$, $(k_0 + 8, l_0)$, $(k_0 + 10, l_0)$} in a slot and a resource block, where $k_0$ is an index of a subcarrier in the resource block, and $l_0$ is an index of a symbol in the slot. Optionally, the resource block includes 12 subcarriers, and the slot includes 14 symbols.

In an optional implementation, a quantity of ports supported by the reference signal is 1;

a frequency domain density of the reference signal on first time-frequency resources is 6, where the frequency domain density is a quantity of resource elements occupied by the reference signal per resource block per port; and a code division multiplexing type supported by the reference signal is no code division multiplexing.

In an optional implementation, the method further includes:
sending first indication information, where the first indication information indicates the first format.

According to a second aspect, a signal receiving method is provided. The method may be performed by a terminal device, a chip, a readable storage medium, or a component or an apparatus that may be used in a terminal device. The signal receiving method includes:

receiving a plurality of reference signals, where initial values of sequences of the plurality of reference signals are the same, and a time domain interval between any two adjacent reference signals in the plurality of reference signals is less than one radio frame; and
performing channel measurement based on the plurality of reference signals.

In an optional implementation, an initial value of a pseudo-random sequence of the reference signal is determined based on a physical layer cell identity.

In an optional implementation, the initial value of the pseudo-random sequence of the reference signal satisfies:

$$c_{init} = \left(2^{10}\left(2N_{ID}^{cell} + 1\right) + N_{ID}^{cell}\right)\mod 2^{31} ,$$

where $N_{ID}^{cell}$ is the physical layer cell identity.

In an optional implementation, an initial value of a pseudo-random sequence of the reference signal is determined based on at least a smallest time domain interval between the reference signals, where the smallest time domain interval is a smallest value of time domain intervals between adjacent reference signals in the plurality of reference signals.

In an optional implementation, the initial value of the pseudo-random sequence of the reference signal is

$$c_{init} = \left(2^{10}\left(\left(N_{symb}^{slot}n_{s,f}^{\mu} + l\right)\bmod T + 1\right)\left(2N_{ID}^{cell} + 1\right) + N_{ID}^{cell}\right)\bmod 2^{31}$$

, where $c_{init}$ indicates the initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and *l* is an index of an OFDM symbol for the reference signal in a slot.

In an optional implementation, the reference signal is a channel state information-reference signal.

In an optional implementation, the initial value of the pseudo-random sequence of the reference signal is

$$c_{init} = \left(2^{17}\left(\left(N_{symb}^{slot}n_{s,f}^{\mu} + l\right)\bmod T + 1\right)\left(2N_{ID}^{cell} + 1\right) + 2N_{ID}^{cell}\right)\bmod 2^{31}$$

, where $c_{init}$ indicates the initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and *l* is an index of an OFDM symbol for the reference signal in a slot.

In an optional implementation, the reference signal is a demodulation reference signal.

In an optional implementation, $N_{symb}^{slot}N_{s,f}^{\mu}\bmod T = 0$, where $N_{s,f}^{\mu}$ is a quantity of slots in a radio frame.

In an optional implementation, the plurality of reference signals occupy a plurality of symbols, indexes of the plurality of symbols belong to a first set, and the first set satisfies R={T×e+z|e∈S,S⊆{0,1,2,...}}, where R indicates the first set, T indicates the smallest time domain interval between the reference signals, z is an integer greater than or equal to 0, and S indicates a second set, where the second set is a subset of a natural number set.

The reference signal is mapped to time-frequency resources in a first format, and positions of the time-frequency resources in the first format are {$(k_0, l_0)$, $(k_0 + 2, l_0)$, $(k_0 + 4, l_0)$, $(k_0 + 6, l_0)$, $(k_0 + 8, l_0)$, $(k_0 + 10, l_0)$} in a slot and a resource block, where $k_0$ is an index of a subcarrier in the resource block, and $l_0$ is an index of a symbol in the slot. Optionally, the resource block includes 12 subcarriers, and the slot includes 14 symbols.

In an optional implementation, a quantity of ports supported by the reference signal is 1;

a frequency domain density of the reference signal on first time-frequency resources is 6, where the frequency domain density is a quantity of resource elements occupied by the reference signal per resource block per port; and
a code division multiplexing type supported by the reference signal is no code division multiplexing.

In an optional implementation, the method further includes:
receiving first indication information, where the first indication information indicates the first format.

According to a third aspect, a signal sending apparatus is provided. The apparatus may be a network device, a chip, a readable storage medium, or a component or an apparatus that may be used in a network device. The signal sending apparatus includes:

a sending module, configured to send a plurality of reference signals, where initial values of sequences of the plurality of reference signals are the same, and a time domain interval between any two adjacent reference signals in the plurality of reference signals is less than one radio frame; and
a receiving module, configured to receive an echo signal of at least one of the plurality of reference signals.

For the signal sending apparatus provided in this embodiment of this application, because initial values of pseudo-random sequences of the plurality of reference signals sent by the apparatus are all the same, interfering signals received by the apparatus from another network device within coherent processing time remain substantially unchanged within the coherent processing time. Interfering signals present after Fourier transform are concentrated in a zero-velocity region of a range-velocity spectrum, reducing an extent of a sensing blind zone.

In an optional implementation, an initial value of a pseudo-random sequence of the reference signal is determined based on a physical layer cell identity.

In an optional implementation, the initial value of the pseudo-random sequence of the reference signal satisfies:

$$c_{init} = \left(2^{10}\left(2N_{ID}^{cell} + 1\right) + N_{ID}^{cell}\right) \bmod 2^{31} \, ,$$

where $N_{ID}^{cell}$ is the physical layer cell identity.

In an optional implementation, an initial value of a pseudo-random sequence of the reference signal is determined based on at least a smallest time domain interval between the reference signals, where the smallest time domain interval is a smallest value of time domain intervals between adjacent reference signals in the plurality of reference signals.

In an optional implementation, the initial value of the pseudo-random sequence of the reference signal is

$$c_{init} = \left(2^{10}\left(\left(N_{symb}^{slot}n_{s,f}^{\mu} + l\right)\bmod T + 1\right)\left(2N_{ID}^{cell} + 1\right) + N_{ID}^{cell}\right)\bmod 2^{31} \, ,$$ where $c_{init}$ indicates the initial

value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and $l$ is an index of an OFDM symbol for the reference signal in a slot.

In an optional implementation, the reference signal is a channel state information-reference signal.

In an optional implementation, the initial value of the pseudo-random sequence of the reference signal is

$$c_{init} = \left(2^{17}\left(\left(N_{symb}^{slot}n_{s,f}^{\mu} + l\right)\bmod T + 1\right)\left(2N_{ID}^{cell} + 1\right) + 2N_{ID}^{cell}\right)\bmod 2^{31} \, ,$$ where $c_{init}$ indicates the

initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and $l$ is an index of an OFDM symbol for the reference signal in a slot.

In an optional implementation, the reference signal is a demodulation reference signal.

In an optional implementation, $N_{symb}^{slot}N_{s,f}^{\mu} \bmod T = 0$, where $N_{s,f}^{\mu}$ is a quantity of slots in a radio frame.

In an optional implementation, the plurality of reference signals occupy a plurality of symbols, indexes of the plurality of symbols belong to a first set, and the first set satisfies R={T×e+z|e∈S,S⊆{0,1,2,...}}, where R indicates the first set, T indicates the smallest time domain interval between the reference signals, z is an integer greater than or equal to 0, and S indicates a second set, where the second set is a subset of a natural number set.

The reference signal is mapped to time-frequency resources in a first format, and positions of the time-frequency resources in the first format are $\{(k_0, l_0), (k_0 + 2, l_0), (k_0 + 4, l_0), (k_0 + 6, l_0), (k_0 + 8, l_0), (k_0 + 10, l_0)\}$ in a slot and a resource block, where $k_0$ is an index of a subcarrier in the resource block, and $l_0$ is an index of a symbol in the slot. Optionally, the resource block includes 12 subcarriers, and the slot includes 14 symbols.

In an optional implementation, a quantity of ports supported by the reference signal is 1;

a frequency domain density of the reference signal on first time-frequency resources is 6, where the frequency domain density is a quantity of resource elements occupied by the reference signal per resource block per port; and a code division multiplexing type supported by the reference signal is no code division multiplexing.

In an optional implementation, the sending module is further configured to:
send first indication information, where the first indication information indicates the first format.

According to a fourth aspect, a signal receiving apparatus is provided. The apparatus may be a terminal device, a chip, a readable storage medium, or a component or an apparatus that may be used in a terminal device. The signal receiving apparatus includes:

a receiving module, configured to receive a plurality of reference signals, where initial values of sequences of the plurality of reference signals are the same, and a time domain interval between any two adjacent reference signals in the plurality of reference signals is less than one radio frame; and
a processing module, configured to perform channel measurement based on the plurality of reference signals.

In an optional implementation, an initial value of a pseudo-random sequence of the reference signal is determined based on a physical layer cell identity.

In an optional implementation, the initial value of the pseudo-random sequence of the reference signal satisfies:

$$c_{init} = \left(2^{10}\left(2N_{ID}^{cell} + 1\right) + N_{ID}^{cell}\right)mod\, 2^{31},$$

where $N_{ID}^{cell}$ is the physical layer cell identity.

In an optional implementation, an initial value of a pseudo-random sequence of the reference signal is determined based on at least a smallest time domain interval between the reference signals, a physical layer cell identity, and a time domain position of the reference signal, where the smallest time domain interval is a smallest value of time domain intervals between adjacent reference signals in the plurality of reference signals.

In an optional implementation, the initial value of the pseudo-random sequence of the reference signal is

$$c_{init} = \left(2^{10}\left(\left(N_{symb}^{slot}n_{s,f}^{\mu} + l\right)mod\, T + 1\right)\left(2N_{ID}^{cell} + 1\right) + N_{ID}^{cell}\right)mod\, 2^{31}, \text{ where } c_{init} \text{ indicates the initial}$$

value, $N_{symb}^{slot}$ is a quantity of symbols in a slot, $n_{s,f}^{\mu}$ is a number of a slot for the reference signal in a radio frame, $N_{ID}^{cell}$ is the physical layer cell identity, T is the smallest time domain interval between the reference signals, and $l$ is an index of an OFDM symbol for the reference signal in a slot.

In an optional implementation, the reference signal is a channel state information-reference signal.

In an optional implementation, the initial value of the pseudo-random sequence of the reference signal is

$$c_{init} = \left(2^{17}\left(\left(N_{symb}^{slot}n_{s,f}^{\mu} + l\right)mod\, T + 1\right)\left(2N_{ID}^{cell} + 1\right) + 2N_{ID}^{cell}\right)mod\, 2^{31}, \text{ where } c_{init} \text{ indicates the}$$

initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and $l$ is an index of an OFDM symbol for the reference signal in a slot.

In an optional implementation, the reference signal is a demodulation reference signal.

In an optional implementation, $N_{symb}^{slot}N_{s,f}^{\mu}\, mod\, T = 0$, where $N_{s,f}^{\mu}$ is a quantity of slots in a radio frame.

In an optional implementation, the plurality of reference signals occupy a plurality of symbols, indexes of the plurality of symbols belong to a first set, and the first set satisfies R={T×e+z|e∈S,S⊆{0,1,2,...}}, where R indicates the first set, T indicates the smallest time domain interval between the reference signals, z is an integer greater than or equal to 0, and S indicates a second set, where the second set is a subset of a natural number set.

The reference signal is mapped to time-frequency resources in a first format, and positions of the time-frequency resources in the first format are {$(k_0,l_0)$, $(k_0 + 2, l_0)$, $(k_0 + 4, l_0)$, $(k_0 + 6, l_0)$, $(k_0 + 8, l_0)$, $(k_0 + 10, l_0)$} in a slot and a resource block, where $k_0$ is an index of a subcarrier in the resource block, and $l_0$ is an index of a symbol in the slot. Optionally, the resource block includes 12 subcarriers, and the slot includes 14 symbols.

In an optional implementation, a quantity of ports supported by the reference signal is 1;

a frequency domain density of the reference signal on first time-frequency resources is 6, where the frequency domain density is a quantity of resource elements occupied by the reference signal per resource block per port; and
a code division multiplexing type supported by the reference signal is no code division multiplexing.

In an optional implementation, the receiving module is further configured to:
receive first indication information, where the first indication information indicates the first format.

According to a fifth aspect, a signal sending apparatus is provided, including at least one processor. The processor is configured to execute instructions stored in a memory, and when the instructions are executed by the at least one processor, the method according to the first aspect is implemented.

According to a sixth aspect, a signal receiving apparatus is provided, including at least one processor. The processor is configured to execute instructions stored in a memory, and when the instructions are executed by the at least one processor, the method according to the second aspect is implemented.

According to a seventh aspect, a computer-readable storage medium is provided. The computer-readable storage medium stores instructions, and when the instructions are executed by a computer, the method according to the first aspect is implemented.

According to an eighth aspect, a computer-readable storage medium is provided. The computer-readable storage medium stores instructions, and when the instructions are executed by a computer, the method according to the second aspect is implemented.

According to a ninth aspect, a computer program product is provided. The computer program product stores instructions, and when the instructions are executed by a computer, the method according to the first aspect is implemented.

According to a tenth aspect, a computer program product is provided. The computer program product stores instructions, and when the instructions are executed by a computer, the method according to the second aspect is implemented.

According to an eleventh aspect, a system is provided. The system includes the apparatus according to the third aspect and the apparatus according to the fourth aspect.

BRIEF DESCRIPTION OF DRAWINGS

FIG. 1 is a diagram of two communication scenarios to which an embodiment of this application is applicable;
FIG. 2 is a diagram of time-frequency resources to which a CSI-RS signal is mapped according to an embodiment of this application;
FIG. 3 is a diagram of interference between network devices according to an embodiment of this application;
FIG. 4 is a diagram of a sensing signal to interference plus noise ratio according to an embodiment of this application;
FIG. 5 is a diagram of a signal sending method according to an embodiment of this application;
FIG. 6 is a diagram of reference signal distribution in time domain according to an embodiment of this application;
FIG. 7 is another diagram of reference signal distribution in time domain according to an embodiment of this application;
FIG. 8 is a diagram of a sensing signal to interference plus noise ratio according to an embodiment of this application;
FIG. 9 is a diagram of time-frequency resources to which a CSI-RS signal is mapped according to an embodiment of this application;
FIG. 10 is a diagram of a reference signal according to an embodiment of this application;
FIG. 11 is a diagram of another reference signal according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of another communication apparatus according to an embodiment of this application.

DESCRIPTION OF EMBODIMENTS

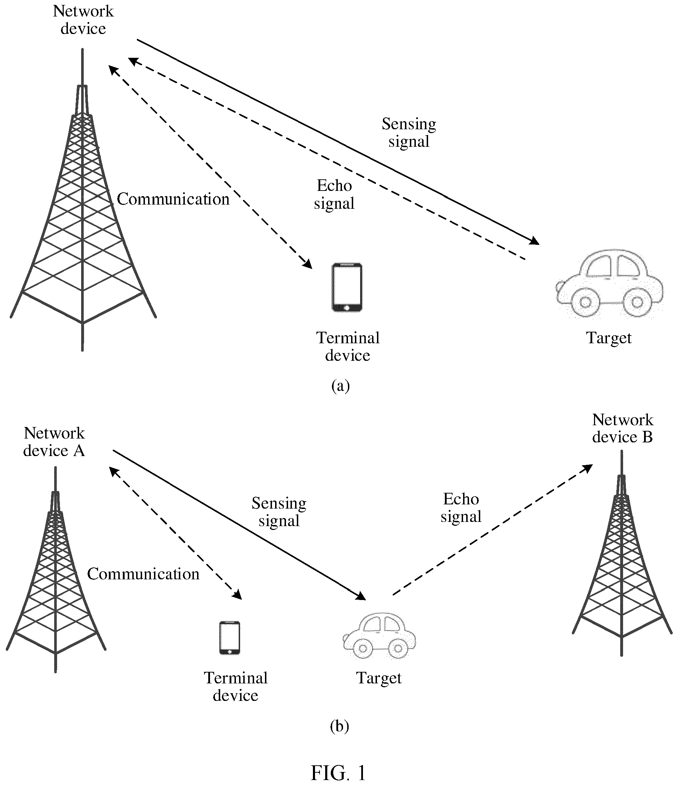

Embodiments of this application are applicable to wireless communication systems, including a 5th generation (5th Generation, 5G) communication system or a 5.5G wireless communication system, a further evolved system based on new radio (New Radio, NR), and a future wireless communication system such as a 6th generation (6th Generation, 6G) communication system. FIG. 1 is a diagram of two communication scenarios to which an embodiment of this application is applicable.

FIG. 1(a) is a diagram of an application scenario according to this application. In this application scenario, a network device sends a sensing signal, and the network device receives an echo signal. The echo signal is a reflected signal generated when the sensing signal encounters a target in an environment. The network device performs sensing processing on the received echo signal, to obtain information such as a location and a velocity of the target. It should be noted that, when the network device performs sensing, time division multiplexing may be used for sensing and communication, that is, the network device sends only the sensing signal at a moment, and sends a communication signal at another moment to communicate with a terminal device. When the network device performs sensing, a multiplexing manner such as frequency division or space division may alternatively be used for the sensing signal and the communication signal, that is, the network device may simultaneously perform sensing and communication at a same moment. As shown in FIG. 1(a), the network device sends the sensing signal to sense the target, and at the same time, sends the communication signal to communicate with the terminal device.

FIG. 1(b) is a diagram of another application scenario according to this application. In this application scenario, a network device A sends a sensing signal, and another network device B receives an echo signal. The echo signal is a reflected signal generated when the sensing signal encounters a target in an environment. The network device B performs sensing processing on the received echo signal, to obtain information such as a location and a velocity of the target. Similar to FIG. 1(a), when the network device performs sensing, time division multiplexing may be used for sensing and communication, that is, the network device A sends only the sensing signal at a moment, and sends a communication signal at another moment to communicate with a terminal device. When the network device A sends the sensing signal, a multiplexing manner such as frequency division or space division may alternatively be used for the sensing signal and the communication signal, that is, the network device A may simultaneously send the sensing signal and the communication signal at a same moment. As shown in FIG. 1(b), the network device A sends the sensing signal to jointly sense the target with the network device B, and at the same time, sends the communication signal to communicate with the terminal device.

It should be noted that the target in this application may be any tangible object that can reflect an electromagnetic wave, for example, a ground object such as a mountain, a forest, or a building, or may alternatively include a movable object such as a vehicle, an unmanned aerial vehicle, a pedestrian, or a terminal device. The target may also be referred to as a target object, a target to be sensed, a target to be detected, an object to be sensed, an object to be detected, a device to be sensed, or the like. This is not limited in this embodiment of this application.

In this embodiment of this application, a reference signal may be used as a sensing signal, and the reference signal may be, for example, a CSI-RS or a DMRS.

A CSI-RS is used as an example of a reference signal. In an example, an initial value of a sequence for generating a CSI-RS signal is:

$$c_{init} = \left(2^{10}\left(N_{symb}^{slot} n_{s,f}^{\mu} + l + 1\right)(2n_{ID} + 1) + n_{ID}\right) \bmod 2^{31} \qquad (1)$$

$n_{s,f}^{\mu}$ is a number of a slot in which the reference signal is located in a radio frame (a radio frame whose subcarrier spacing is configured as $\mu$); $l$ is an index of an orthogonal frequency division multiplexing (orthogonal frequency division multiplexing, OFDM) symbol occupied by the reference signal in a slot; $n_{ID}$ is configured by using a higher-layer parameter scramblingID or sequenceGenerationConfig; and $N_{symb}^{slot}$ is equal to a quantity of OFDM symbols (for example, 14 or 12) in a slot.

A pseudo-random sequence of the reference signal is generated based on an initial value of the pseudo-random sequence of the reference signal, and a sequence of the reference signal in a symbol $l$ is generated based on the pseudo-random sequence of the reference signal. The sequence of the reference signal is mapped to resource elements (resource element, RE).

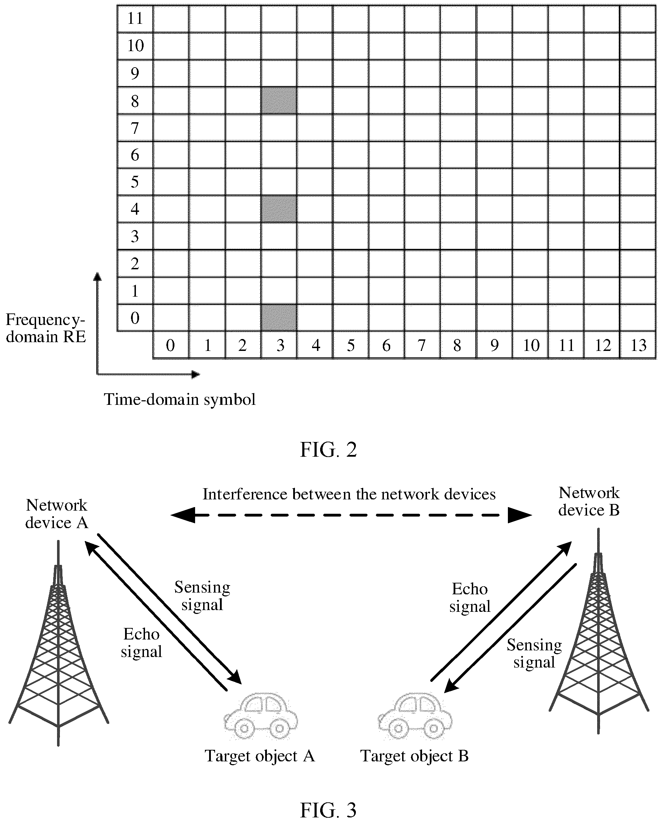

In this embodiment of this application, a 1-port CSI-RS signal supports a CSI-RS resource mapping configuration (CSI-RS-ResourceMapping) with a maximum density being 3. To be specific, positions of resources to which the CSI-RS signal is mapped are $(k_0, l_0)$, $(k_0 + 4, l_0)$, $(k_0 + 8, l_0)$, where $k_0$ is an index of a subcarrier in an RB, and $l_0$ is an index of a time-domain symbol in a slot. FIG. 2 is a diagram of time-frequency resources to which a CSI-RS signal is mapped when $l_0$=3 and $k_0$=0.

A DMRS is used as an example of a reference signal. In an example, an initial value of a sequence for generating a DMRS signal is:

$$c_{init} = \left(2^{17}\left(N_{symb}^{slot} n_{s,f}^{\mu} + l + 1\right)\left(2N_{ID}^{\bar{n}_{SCID}^{\bar{\lambda}}} + 1\right) + 2^{17}\left\lfloor\frac{\bar{\lambda}}{2}\right\rfloor + 2N_{ID}^{\bar{n}_{SCID}^{\bar{\lambda}}} + \bar{n}_{SCID}^{\bar{\lambda}}\right) \bmod 2^{31} \qquad (2)$$

$l$ is an index of an OFDM symbol occupied by the reference signal in a slot; $n_{s,f}^{\mu}$ is a number of a slot in which the reference signal is located in a radio frame (a radio frame whose subcarrier spacing is configured as $\mu$); $N_{symb}^{slot}$ is equal to a quantity of OFDM symbols (for example, 14 or 12) in a slot; and $N_{ID}^{\bar{n}_{SCID}^{\bar{\lambda}}}$, $\bar{n}_{SCID}^{\bar{\lambda}}$, and $\bar{\lambda}$ are determined by a higher-layer parameter and downlink control information (downlink control information, DCI), and when a higher-layer parameter DMRS-DownlinkConfig does not include scramblingID0 and scramblingID1, $N_{ID}^{\bar{n}_{SCID}^{\bar{\lambda}}}$ is a physical layer cell identity.

In this embodiment of this application, a sequence of a reference signal may be a pseudo-random sequence. It can be learned from the formula (1) and the formula (2) that an initial value of a pseudo-random sequence of a reference signal is related to a position of the reference signal in time domain. Initial values of pseudo-random sequences of reference signals that occupy different time-domain symbols are different. When such reference signals are used as sensing signals, sensing signals sent by a network device within coherent processing time are different.

In a networking scenario, a plurality of base stations send sensing signals by using a same time-frequency resource. In this scenario, in a sensing process, a network device not only receives an echo signal of a sensing signal sent by the network device, but also may receive a sensing signal sent by another network device, resulting in interference between network devices. This causes a problem of sensing blind zone. FIG. 3 is a diagram of interference between network devices according to an embodiment of this application. As shown in FIG. 3, a network device A and a network device B send sensing signals on a same time-frequency resource. The network device A sends a sensing signal A, and an echo signal A is formed when the sensing signal A encounters a target object A. The network device B sends a sensing signal B, and an echo signal B is formed when the sensing signal B encounters a target object B. Because the network device A and the network device B send the sensing signals on the same time-frequency resource, the network device A further receives the sensing signal B sent by the network device B, and the network device B receives the sensing signal A sent by the network device A. In this case, for the network device A, the sensing signal B may be referred to as an inter-network device interfering signal; and for the network device B, the sensing signal A may be referred to as an inter-network device interfering signal.

Because sensing signals sent by a network device within coherent processing time are different, sensing signals received by the network device and sent by another network device are also different. In other words, the network device A receives, within coherent processing time, a plurality of different sensing signals sent by the network device B. When the network device A performs sensing processing, the network device A performs, in a slow time dimension, Fourier transform (discrete Fourier transform, DFT) on signals received within the coherent processing time. In this case, inter-network device interfering signals are randomly dispersed to various velocities in a velocity spectrum, raising a noise floor level of sensing detection and forming a sensing blind zone. Herein, the slow time dimension is a time dimension along sensing signal repetition periodicities. For example, a network device periodically sends a sensing signal (or referred to as a pulse). When a plurality of pulses are processed, slow time may be used for marking time between different pulses. One pulse may be considered as one sampling in the slow time dimension.

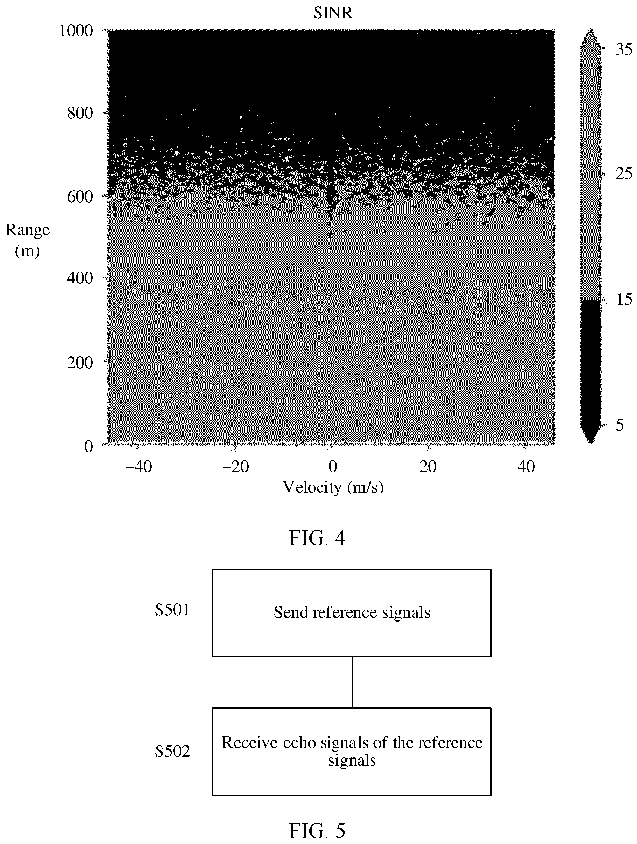

FIG. 4 is a diagram of a sensing signal to interference plus noise ratio (signal to interference plus noise ratio, SINR) according to an embodiment of this application. As shown in FIG. 4, the sensing SINR in this embodiment of this application is as follows: sensing signal power/(interference power + noise power). It can be learned from the formula that a smaller SINR value indicates greater noise and interference. In FIG. 4, a magnitude of the SINR is expressed in grayscale. A smaller SINR value indicates a smaller grayscale value and a darker color in a black-and-white image. In FIG. 4, a horizontal coordinate indicates a moving velocity of a sensing target, and a vertical coordinate indicates a range from a base station to the sensing target. It can be learned from FIG. 4 that a longer range from the sensing target to the base station indicates a smaller SINR value, and greater noise and interference. Because inter-base station interfering signals are different and have a same interference characteristic for sensing targets at almost any moving velocities (because different inter-base station interfering signals are randomly dispersed to various velocities in a velocity spectrum), a sensing blind zone is formed, for example, a scope beyond a range of 600 m from the base station in FIG. 4.

An embodiment of this application provides a sensing method, which is used to resolve a problem of sensing blind zone occurring in a sensing process currently, and optionally, may further resolve a problem of sensing range ambiguity.

In this embodiment of this application, a network device includes, for example, an access network (access network, AN) device, for example, a base station (for example, an access point), and may be a device that is in an access network and that communicates with a wireless terminal device through an air interface in one or more cells. Alternatively, a network device is, for example, a roadside unit (roadside unit, RSU) in a vehicle-to-everything (vehicle-to-everything, V2X) technology. The RSU may be a fixed infrastructure entity supporting a V2X application, and may exchange messages with another entity supporting the V2X application. The network device may include an evolved NodeB (NodeB, eNB, or eNodeB, evolved NodeB) in an LTE system or a long term evolution advanced (long term evolution advanced, LTE-A) system, or may include a next generation NodeB (next generation NodeB, gNB) in a 5th generation mobile communication technology (5th generation, 5G) NR system (also referred to as an NR system for short), or may include a central unit (central unit, CU) and a distributed unit (distributed unit, DU) in a cloud access network (cloud radio access network, Cloud RAN) system. This is not limited in this embodiment of this application.

In this embodiment of this application, a terminal device may also be referred to as a user equipment, and includes a device that provides voice and/or data connectivity for a user. The terminal device may communicate with a core network through a radio access network (radio access network, RAN), exchange voice or data with the RAN, or interact with the RAN for voice and data. The terminal device may include a user equipment (user equipment, UE), a wireless user equipment, a mobile user equipment, a device-to-device communication (device-to-device, D2D) user equipment, or a vehicle-to-everything (vehicle-to-everything, V2X) user equipment. For example, in a vehicle-to-everything (vehicle-to-everything, V2X) technology, a user equipment is a roadside unit RSU, an on board unit (on board unit, OBU), or a telematics box (telematics box, T-BOX). Alternatively, the terminal device includes a machine-to-machine/machine-type communications (machine-to-machine/machine-type communications, M2M/MTC) user equipment, an Internet of things (Internet of things, IoT) user equipment, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile user equipment, a portable, pocket-sized, handheld, or computer-built-in mobile apparatus, or the like. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device alternatively includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

In this embodiment of this application, an apparatus configured to implement a function of a user equipment may be a terminal device, or may be an apparatus that can support a terminal device for implementing the function, for example, a chip system. The apparatus may be installed in the terminal device. In this embodiment of this application, the chip system may include a chip, or may include a chip and another discrete device.

The following describes the sensing method provided in this embodiment of this application. FIG. 5 is a diagram of a signal sending method according to an embodiment of this application. As shown in FIG. 5:

S501: A network device sends a plurality of reference signals, where initial values of sequences of the plurality of reference signals are the same, the sequences of the reference signals may be pseudo-random sequences, and a time domain interval between any two adjacent reference signals in the plurality of reference signals is less than one radio frame. Herein, a pseudo-random sequence is defined as follows: if a sequence may be predetermined, may be repeatedly generated and reproduced, and has a randomness characteristic (that is, a statistical characteristic) of a specific random sequence, this sequence is referred to as a pseudo-random sequence. For example, a Gold sequence and a maximum-length linear shift register sequence (an m-sequence) are typical pseudo-random sequences.

In this embodiment of this application, the plurality of reference signals are at least two reference signals, and the initial values of the sequences of the plurality of reference signals being the same means that the initial values of the sequences of all the plurality of reference signals are all the same.

In NR, a time length of one radio frame is 10 ms, one radio frame includes 10 subframes, each subframe includes one or more slots whose quantity is related to a subcarrier spacing, and each slot includes 14 OFDM symbols (OFDM symbols with normal cyclic prefixes).

For a subcarrier spacing of 15 kHz, one radio frame includes 10 slots, and a length of each slot is 1 ms.

For a subcarrier spacing of 30 kHz, one radio frame includes 20 slots, and a length of each slot is 0.5 ms.

For a subcarrier spacing of 60 kHz, one radio frame includes 40 slots, and a length of each slot is 0.25 ms.

For a subcarrier spacing of 120 kHz, one radio frame includes 80 slots, and a length of each slot is 0.125 ms.

With a subcarrier spacing of 15 kHz as an example, one radio frame includes 140 OFDM symbols (OFDM symbols with normal cyclic prefixes).

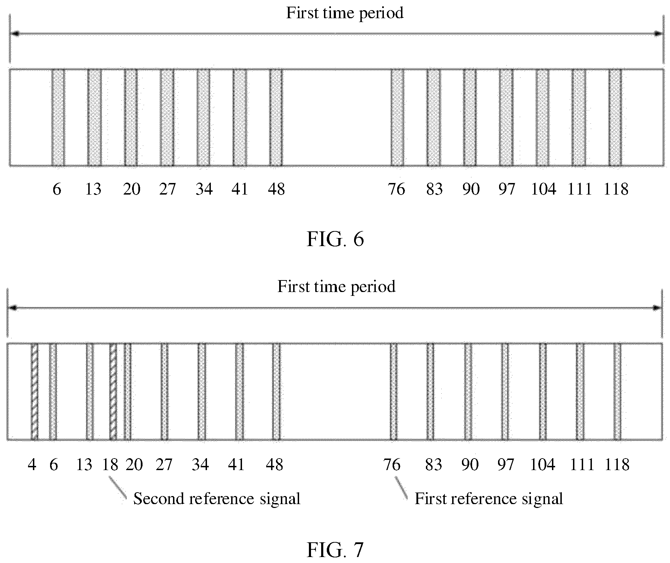

FIG. 6 is a diagram of reference signal distribution in time domain according to an embodiment of this application. As shown in FIG. 6, a horizontal coordinate indicates a time domain and is represented by a letter t, and a vertical coordinate indicates a frequency domain and is represented by a letter f.

In this embodiment of this application, one reference signal may occupy one symbol in time domain. Numbers in FIG. 6 indicate indexes of symbols occupied by all reference signals. A quantity of the plurality of reference signals being 14 is used as an example. FIG. 6 shows that the indexes of the symbols are 6, 13, 20, 27, 34, 41, 48, 76, 83, 90, 97, 104, 111, and 118. Initial values of pseudo-random sequences of the 14 reference signals are all the same.

In this embodiment of this application, the time domain interval between any two adjacent reference signals is less than one radio frame. The foregoing 14 reference signals are still used as an example. A time domain interval between reference signals whose symbol indexes are 6 and 13 is a length of seven symbols, and a time domain interval between two adjacent reference signals whose symbol indexes are 48 and 76 is a length of 18 symbols. Both lengths are less than a time domain length of one radio frame.

It can be understood that the plurality of reference signals in this embodiment of this application may be reference signals that are sent by the network device in a time period and that are used as sensing signals, and the time period may be coherent processing time of the network device in a sensing process. In FIG. 6, the coherent processing time is represented as a first time period.

A specific meaning of the coherent processing time of the network device is as follows.

The network device sends a plurality of sensing signals within the coherent processing time. The network device or another network device receives an echo signal of each of the plurality of sensing signals, and performs coherent combining processing on the echo signals of all the sensing signals sent within the coherence time, so as to measure a range and a velocity of a target.

In an optional implementation, indexes of a plurality of symbols occupied by the plurality of reference signals in the time period belong to a first set. The first set may be represented as $R=\{T \times e+z|e \in S, S \subseteq \{0,1,2,...\}\}$, where R indicates the first set, T indicates a smallest time domain interval between the reference signals, z is an integer greater than or equal to 0, and S indicates a second set. The second set is a subset of a natural number set.

The quantity of the plurality of reference signals being 14 and the indexes of the occupied symbols being 6, 13, 20, 27, 34, 41, 48, 76, 83, 90, 97, 104, 111, and 118 are still used as an example. The smallest time domain interval between the reference signals is a smallest value of time domain intervals between adjacent reference signals. In the foregoing example, there are a total of 13 time intervals between the 14 reference signals, where 12 time domain intervals are of a length of 7 symbols, and one time domain interval is of a length of 18 symbols (the time domain interval between a reference signal whose symbol index is 48 and a reference signal whose symbol index is 76). In this case, the smallest time domain interval between the plurality of reference signals is 7, that is, a value of T in the foregoing formula for the first set is 7.

e belongs to the second set S, the second set S is a subset of the natural number set, and z is an integer greater than or equal to 0. In the foregoing example, a value of z is 6, and a value of e is 0, 1, 2, 3, 4, 5, 6, 10, 11, 12, 13, 14, 15, or 16. Therefore, the second set S is {0,1,2,3,4,5,6,10,11,12,13,14,15,16}.

In this embodiment of this application, a meaning of the value of z may be understood as a quantity of symbols between a time-domain symbol occupied by a 1st of the plurality of reference signals sent by the network device in the time period and a 1st time-domain symbol in the time period.

It can be understood that, when the network device sends the 1st reference signal at a position of the 1st symbol in the first time period, time-domain indexes of the foregoing 14 reference signals are 0, 7, 14, 21, 28, 35, 42, 70, 77, 84, 91, 98, 105, and 112. In this case, the value of z is 0.

In the foregoing numbering rule, the 1st symbol in the first time period is used as a start position for numbering. This is not limited in this embodiment of this application. Alternatively, an index of the time-domain symbol in which the 1st reference signal sent by the network device is located may be set to 0. In this case, the first set may be represented as R= {T×e|e∈S,S⊆{0,1,2,...}}.

In an optional implementation, initial values of pseudo-random sequences of the plurality of reference signals may be determined based on a physical layer cell identity. The physical layer cell identity is an identity indicating a physical layer cell of the network device. A terminal device performs cell search by receiving a synchronization signal (including a primary synchronization signal (primary synchronization signal) and a secondary synchronization signal (secondary synchronization signal)) sent by the network device, completes time and frequency synchronization with the physical layer cell of the network device, and detects the physical layer cell identity of the physical layer cell of the network device.

Specifically, the terminal device determines a cell ID $N_{ID}^{(2)}$ of the network device by detecting the primary synchronization signal sent by the network device, and the terminal device determines a cell group ID $N_{ID}^{(1)}$ of the network device by detecting the secondary synchronization signal sent by the network device. Then, the terminal device may determine the physical layer cell identity $N_{ID}^{cell} = 3N_{ID}^{(1)} + N_{ID}^{(2)}$ of the physical layer cell of the network device.

In an optional implementation, the initial values of the pseudo-random sequences of the plurality of reference signals satisfy:

$$c_{init} = \left(2^{10}\left(2N_{ID}^{cell} + 1\right) + N_{ID}^{cell}\right) \bmod 2^{31} \qquad (3)$$

$c_{init}$ is the initial value, $N_{ID}^{cell}$ is the physical layer cell identity, and mod indicates a modulo operation.

After the network device is deployed and used, the physical layer cell identity of the network device remains unchanged. Therefore, the initial values of the pseudo-random sequences of the reference signals obtained according to the foregoing formula are all the same.

In an optional implementation, the initial values of the pseudo-random sequences of the plurality of reference signals are:

$$c_{init} = \left(2^{10}\left(\left(N_{symb}^{slot}n_{s,f}^{\mu} + l\right)\bmod T + 1\right)\left(2N_{ID}^{cell} + 1\right) + N_{ID}^{cell}\right)\bmod 2^{31} \qquad (4)$$

$c_{init}$ indicates the initial value, $N_{symb}^{slot}$ is a quantity of symbols in a slot, $n_{s,f}^{\mu}$ is a number of a slot for the reference signal in a radio frame (a radio frame whose subcarrier spacing is configured as $\mu$), $N_{ID}^{cell}$ is the physical layer cell identity, T is the smallest time domain interval between the reference signals, $l$ is an index of an OFDM symbol for the reference signal in a slot, and mod indicates a modulo operation.

That the quantity of the plurality of reference signals is 14 and the indexes of the time-domain symbols occupied by the 14 reference signals are 6, 13, 20, 27, 34, 41, 48, 76, 83, 90, 97, 104, 111, and 118 is still used as an example. It is assumed that a start position of the first time period coincides with a start position of a radio frame, and an index of a 1st symbol in a 1st slot in the radio frame is 0. In this case, a slot in which the symbol with the index 6 is located is numbered 0 in the radio frame (a slot includes 14 symbols), a slot in which the symbol with the index 13 is located is numbered 0 in the radio frame, a slot in which the symbol with the index 20 is located is numbered 1 in the radio frame, ..., and a slot in which the symbol with the index 118 is located is numbered 8 in the radio frame.

For a reference signal whose symbol index is 6, $N_{\text{symb}}^{\text{slot}}=14$, $n_{\text{s,f}}^{\mu}=0$, l=6, and T=7. Therefore, an initial value of a pseudo-random sequence of the reference signal is $c_{\text{init}}=$

$$\left(2^{10}(6 \bmod 7 + 1)\left(2N_{ID}^{cell} + 1\right) + N_{ID}^{cell}\right)\bmod 2^{31} = \left(7 * 2^{10}\left(2N_{ID}^{cell} + 1\right) + N_{ID}^{cell}\right)\bmod 2^{31}.$$

For a reference signal whose symbol index is 13, $N_{\text{symb}}^{\text{slot}}=14$, $n_{\text{s,f}}^{\mu}=0$, l=13, and T=7. Therefore, an initial value of a pseudo-random sequence of the reference signal is $c_{\text{init}}=$

$$\left(2^{10}(13 \bmod 7 + 1)\left(2N_{ID}^{cell} + 1\right) + N_{ID}^{cell}\right)\bmod 2^{31} = \left(7 * 2^{10}\left(2N_{ID}^{cell} + 1\right) + N_{ID}^{cell}\right)\bmod 2^{31}.$$

For a reference signal whose symbol index is 20, $N_{\text{symb}}^{\text{slot}}=14$, $n_{\text{s,f}}^{\mu}=1$, l=6, and T=7. Therefore, an initial value of a pseudo-random sequence of the reference signal is $c_{\text{init}}=$

$$\left(2^{10}(20 \bmod 7 + 1)\left(2N_{ID}^{cell} + 1\right) + N_{ID}^{cell}\right)\bmod 2^{31} = \left(7 * 2^{10}\left(2N_{ID}^{cell} + 1\right) + N_{ID}^{cell}\right)\bmod 2^{31}.$$

For a reference signal whose symbol index is 118, $N_{\text{symb}}^{\text{slot}}=14$, $n_{\text{s,f}}^{\mu}=8$, l=6, and T=7. Therefore, an initial value of a pseudo-random sequence of the reference signal is $c_{\text{init}}=$

$$\left(2^{10}(118 \bmod 7 + 1)\left(2N_{ID}^{cell} + 1\right) + N_{ID}^{cell}\right)\bmod 2^{31} = \left(7 * 2^{10}\left(2N_{ID}^{cell} + 1\right) + N_{ID}^{cell}\right)\bmod 2^{31}.$$

Therefore, in this embodiment of this application, the plurality of reference signals have a same initial value for the pseudo-random sequences. In an implementation of this application, T in the foregoing formula satisfies $N_{symb}^{slot}N_{s,f}^{\mu} \bmod T = 0$, where $N_{s,f}^{\mu}$ indicates a quantity of slots in a radio frame (a subcarrier spacing is configured as μ).

It can be learned from the formula (4) that the initial values of the pseudo-random sequences of the plurality of reference signals are no longer related to time domain positions of the reference signals, but are related only to the physical layer cell identity.

In the foregoing implementation, optionally, the plurality of reference signals may be CSI-RS signals.

In an optional implementation, the plurality of reference signals may alternatively be DMRS signals. In this case, the initial values of the pseudo-random sequences of the plurality of reference signals may satisfy:

$$c_{\text{init}} = \left(2^{17}\left(\left(N_{\text{symb}}^{\text{slot}}n_{\text{s,f}}^{\mu} + l\right)\bmod T + 1\right)\left(2N_{\text{ID}}^{\text{cell}} + 1\right) + 2N_{\text{ID}}^{\text{cell}}\right)\bmod 2^{31} \qquad (5)$$

$c_{\text{init}}$ indicates the initial value, $N_{\text{symb}}^{\text{slot}}$ is a quantity of symbols in a slot, $n_{\text{s,f}}^{\mu}$ is a number of a slot for the reference signal in a radio frame (a radio frame whose subcarrier spacing is configured as μ), $N_{\text{ID}}^{\text{cell}}$ is the physical layer cell identity, T is the smallest time domain interval between the reference signals, l is an index of an OFDM symbol for the reference signal in a slot, and mod indicates a modulo operation.

In an optional implementation, the initial values of the pseudo-random sequences of the plurality of reference signals satisfy:

$$c_{\text{init}} = \left(2^{17}\left(2N_{\text{ID}}^{\text{cell}} + 1\right) + 2N_{\text{ID}}^{\text{cell}}\right)\bmod 2^{31} \qquad (6)$$

$c_{\text{init}}$ indicates the initial value, $N_{\text{ID}}^{\text{cell}}$ is the physical layer cell identity, and mod indicates a modulo operation.

The initial values of the pseudo-random sequences of the reference signals determined according to the foregoing formulas are all the same. For specific information, refer to the description of the formula (4). Details are not described herein again.

In an optional implementation, the plurality of reference signals in the foregoing implementation may be referred to as first reference signals. The initial values of the sequences of the plurality of first reference signals are all the same. In the first time period, a second reference signal may further be sent. An initial value of a sequence of the second reference signal is different from the initial values of the sequences of the first reference signals. When the second reference signal is a CSI-RS, an initial value of a pseudo-random sequence of the second reference signal may satisfy the formula (1). When the second reference signal is a DMRS, an initial value of a pseudo-random sequence of the second reference signal may satisfy the formula (2).

As shown in FIG. 7, that the quantity of the plurality of reference signals is 14 and the indexes of the time-domain symbols occupied by the 14 reference signals are 6, 13, 20, 27, 34, 41, 48, 76, 83, 90, 97, 104, 111, and 118 is still used as an example. The network device may further send second reference signals at time domain positions of time-domain symbols with indexes 4 and 18.

S502: The network device receives echo signals of the plurality of reference signals.

In this embodiment of this application, the network device sends the plurality of reference signals as the sensing signals. The echo signals are formed after the plurality of reference signals are reflected by a sensing target. The network device receives the plurality of echo signals corresponding to the plurality of reference signals, and processes the plurality of echo signals, to obtain information such as a location and a moving velocity of the sensing target.

In this embodiment of this application, because the initial values of the pseudo-random sequences of the plurality of reference signals sent by the network device are all the same, sensing signals (interfering signals) received by the network device and sent by another network device within the coherent processing time remain substantially unchanged within the coherent processing time. Interfering signals present after Fourier transform are concentrated in a zero-velocity region of a range-velocity spectrum, significantly reducing an extent of a sensing blind zone.

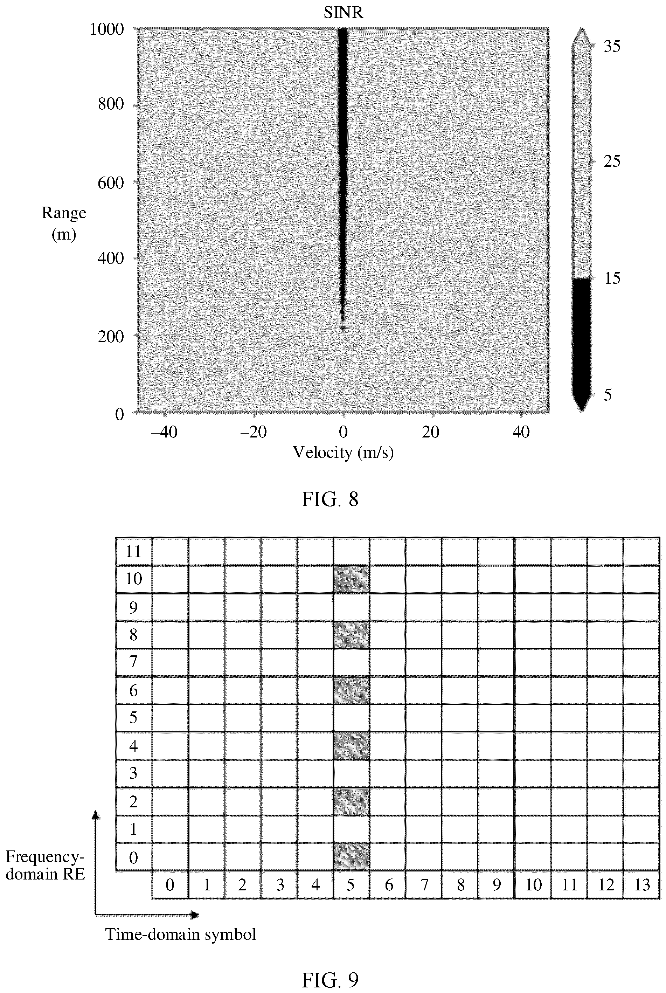

FIG. 8 is a diagram of a sensing SINR according to an embodiment of this application. A horizontal coordinate indicates a moving velocity of a sensing target, and a vertical coordinate indicates a range from a base station to the sensing target. In FIG. 8, a black region is a sensing blind zone obtained by using the reference signals in this embodiment of this application as sensing signals. It can be learned from FIG. 8 that an extent of the sensing blind zone is significantly reduced compared with that in FIG. 4, and is concentrated only in a region near a zero velocity.

Optionally, this embodiment of this application may further include one or more of the following steps.

Before sending the plurality of reference signals, the network device determines the initial values of the pseudo-random sequences of the plurality of reference signals. Optionally, the network device may generate the initial values of the pseudo-random sequences of the plurality of reference signals, and then determine the sequences of the plurality of reference signals based on the generated initial values of the pseudo-random sequences of the reference signals.

The network device maps the generated sequences of the plurality of reference signals to first time-frequency resources. The first time-frequency resources may be time-frequency resources in a first format. The time-frequency resources in the first format may also be understood as resources carrying the plurality of reference signals, or resources to which the plurality of reference signals are mapped.

An example in which the plurality of reference signals are CSI-RS signals is used. Herein, positions of the time-frequency resources in the first format are $\{(k_0, l_0), (k_0 + 2, l_0), (k_0 + 4, l_0), (k_0 + 6, l_0), (k_0 + 8, l_0), (k_0 + 10, l_0)\}$ in a slot and a resource block, where $k_0$ is an index of a subcarrier in the resource block, and $l_0$ is an index of a symbol in the slot. The resource block includes 12 subcarriers, and the slot includes 14 symbols. It is assumed that $l_0 = 5$ and $k_0 = 0$. Referring to FIG. 9, in an RB and in a symbol with a time-domain index of 5, a reference signal is mapped to a subcarrier 0, a subcarrier 2, a subcarrier 4, a subcarrier 6, a subcarrier 8, and a subcarrier 10.

With the resource mapping format for a reference signal provided in this embodiment of this application, a maximum range within which a range ambiguity phenomenon does not occur can be increased. The following describes a reason why the range ambiguity phenomenon occurs.

A 1-port CSI-RS signal is used as an example. The CSI-RS signal supports a resource configuration manner with a maximum density being 3. As shown in FIG. 2, for the existing resource mapping format $(k_0, l_0), (k_0 + 4, l_0), (k_0 + 8, l_0)$ for a CSI-RS signal, when $l_0=3$ and $k_0=0$, a sequence of the CSI-RS signal is mapped to three REs in an RB, which are (a symbol 3, a subcarrier 0), (a symbol 3, a subcarrier 4), and (a symbol 3, a subcarrier 8), and values are 0 on other subcarriers. In other words, a value $X_l[k]$ of the CSI-RS signal on an RE of (a symbol $l$, a subcarrier $k$) satisfies:

$$X_l[k] \begin{cases} = 0 & k \bmod 4 \neq 0 \\ \neq 0 & k \bmod 4 = 0 \end{cases}$$

k is an index of a subcarrier in frequency domain. The CSI-RS signal may be obtained by performing inverse Fourier transform on $X_l[k]$. In other words, the CSI-RS signal's $n^{th}$ sampling point

$x[n] = \sum_{k=0}^{N-1} X[k] \, exp\left(-\frac{j2\pi kn}{N}\right)$ , n = 0,1, ..., N - 1, where N is a product of 12 and a quantity of sampling points of the CSI-RS signal in the symbol $l$ or a quantity of RBs occupied by the CSI-RS signal in the symbol $l$, that is, a value of N is a multiple of 12. k=4u is substituted into the foregoing formula as follows:

$$x[n] = \sum_{u=0}^{N/4-1} X[4u]\, exp\left(-\frac{j2\pi 4un}{N}\right)$$ . Calculation is performed as follows:

$$x\left[n+\frac{N}{4}\right] = \sum_{u=0}^{\frac{N}{4}-1} X[4u]\, exp\left(-\frac{j2\pi 4u\left(n+\frac{N}{4}\right)}{N}\right) = \sum_{u=0}^{\frac{N}{4}-1} X[4u]\, exp\left(-\frac{j2\pi 4un}{N}\right) exp(-j2\pi u)$$

$$= \sum_{u=0}^{\frac{N}{4}-1} X[4u]\, exp\left(-\frac{j2\pi 4un}{N}\right) = x[n]$$

Therefore, a sampling point, numbered n, of the CSI-RS signal is *x[n]*, where $x[n] = x\left[n+\frac{N}{4}\right]$ , n = 0,1, ...,

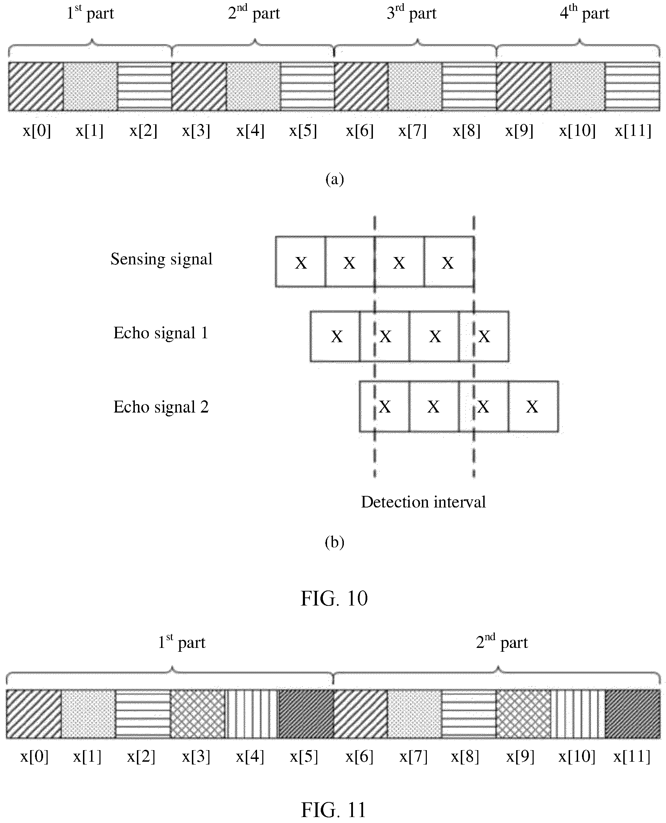

*N* - 1. Four parts included in the CSI-RS signal in time domain are the same. As shown in FIG. 10(a), an example in which a sequence of a CSI-RS signal is mapped to an RB is used. Inverse Fourier transform is performed on $X_l[k]$ to obtain *x[n]*, and a value of N, which is a quantity of sampling points, is 12, where n = 0,1, ...,11.

In the example in FIG. 10(a), *x[0]=x[3]=x[6]=x[9]*, *x[1]=x[4]=x[7]=x[10]*, and *x[2]=x[5]=x[8]=x[11]*. The CSI-RS signal is divided into four identical parts.

If the foregoing reference signal is used as a sensing signal, a range ambiguity phenomenon may occur.

In FIG. 10(b), a reference signal used as a sensing signal has four identical parts, and a time domain length of each part is X. A network device sends the reference signal as the sensing signal. An echo signal 1 is formed after the sensing signal is reflected by a first target object, and an echo signal 2 is formed after the sensing signal is reflected by a second target object. Because ranges between the first target object and the network device and between the second target object and the network device are different, the echo signal 1 and the echo signal 2 arrive at the network device at different time, that is, there is a delay between the echo signal 1 and the echo signal 2.

According to FIG. 10(b), when the delay between the echo signal 1 and the echo signal 2 is a length of one or more Xs, the network device cannot distinguish between the echo signal 1 and the echo signal 2. In this case, the network device cannot distinguish between the first target object and the second target object, and a range that is from the first target object to the network device and that is estimated by the network device is the same as a range that is from the second target object to the network device and that is estimated by the network device. This results in a range ambiguity phenomenon.

According to the foregoing analysis, a maximum range within which a range ambiguity phenomenon does not occur for the network device is related to the time domain length X. A larger X indicates a longer maximum range within which a range ambiguity phenomenon does not occur. It is assumed that the maximum range within which a range ambiguity phenomenon does not occur is D. In this case, for target objects whose ranges from the network device are within a range of D, the network device may distinguish between the target objects at different ranges. When a range between a target object and the network device is D+d1, the network device cannot determine whether the range between the target object and the network device is d1 or D+d1.

In this embodiment of this application, the reference signals are mapped to the time-frequency resources in the first format. A value $X_l[k]$ of a CSI-RS signal on an RE of (a symbol *l*, a subcarrier *k*) satisfies:

$$X_l[k]\begin{cases} = 0 & k \bmod 2 \neq 0 \\ \neq 0 & k \bmod 2 = 0 \end{cases}$$

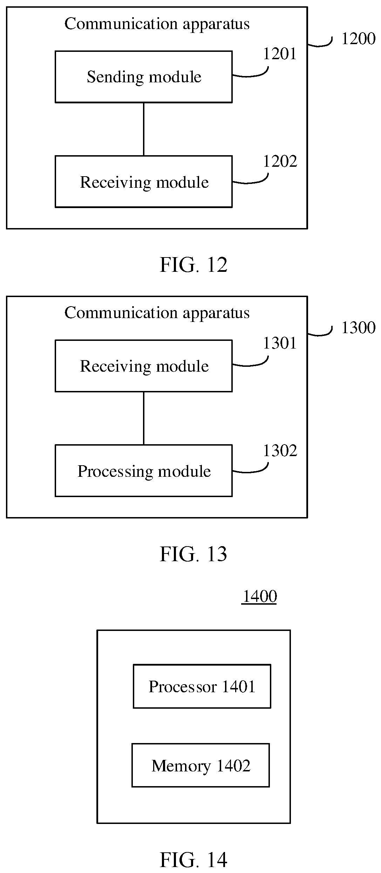

Therefore, a sampling point, numbered n, of the CSI-RS signal is *x[n]*, where $x[n] = x\left[n+\frac{N}{2}\right]$ , n = 0,1, ..., N - 1. Two parts included in the CSI-RS signal in time domain are the same. As shown in FIG. 12, an example in which a sequence of a CSI-RS signal is mapped to an RB is used. Inverse Fourier transform is performed on $X_l[k]$ to obtain *x[n]*, and a value of N, which is a quantity of sampling points, is 12, where n = 0,1, ...,11.

In the example in FIG. 11, *x[0] = x[6]*, *x[1] = x[7]*, *x[2] = x[8]*, *x[3] = x[9]*, *x[4]=x[10]*, and x[5]=x[11]. The CSI-RS signal is divided into two identical parts, and a time domain length of each part is Y. It can be learned that Y=2X. With the resource mapping format provided in this embodiment of this application, the maximum range within which a range ambiguity phenomenon does not occur for the network device doubles compared with that in the conventional technology.

Optionally, for specific information about the time-frequency resources in the first format, refer to Table 1. A quantity of ports supported by a reference signal that is mapped to the time-frequency resources in the first format is 1. A frequency domain density of the reference signal is 6, where the frequency domain density is a quantity of REs occupied by the reference signal per resource block per port. A code division multiplexing type supported by the reference signal is no code division multiplexing. CDM group indexes corresponding to six REs occupied by the reference signal are 0, 0, 0, 0, 0, and 0, respectively. In a CDM group, a frequency-domain index $k'$ of an RE is 0, and a time-domain index $l'$ of the RE is 0.

Table 1

| Row number | Quantity X of ports | Density $\rho$ | CDM type | $(\bar{k}, \bar{l})$ | CDM group index j | $k'$ | $l'$ |
|---|---|---|---|---|---|---|---|
| XX | 1 | 6 | No CDM | $(k_0, l_o), (k_0 + 2, l_o), (k_0 + 4, l_o), (k_0 + 6, l_o), (k_0 + 8, l_o), (k_0 + 10, l_0)$ | 0,0,0,0,0,0 | 0 | 0 |

The network device sends first indication information. The first indication information indicates the first format. That the first indication information indicates the first format may also be understood as that the first indication information indicates a format of the first time-frequency resources, or the first indication information indicates a format of the time-frequency resources to which the plurality of reference signals are mapped.

Optionally, the first indication information includes a frequencyDomainAllocation parameter, where the frequencyDomainAllocation parameter may indicate the row number in Table 1.

Optionally, the frequencyDomainAllocation parameter may indicate the row number by using a character string, for example, 2 bits.

Optionally, the frequencyDomainAllocation parameter is included in radio resource control (radio resource control, RRC) parameters.

After the sequences of the plurality of reference signals are mapped to the first time-frequency resources, the network device performs step S501 to send the plurality of reference signals on the first time-frequency resources.

In some scenarios, when encountering, for example, a tree, a building, a vehicle, a pedestrian, or a terminal device, reference signals sent by a network device may be reflected to form echo signals. In this case, these reference signals may be considered as sensing signals. In some other scenarios, these reference signals may further be received by a terminal device. The terminal device may use the reference signals to perform channel measurement or channel estimation.

For the terminal device, the terminal device receives the plurality of reference signals sent by the network device. Initial values of sequences of the plurality of reference signals are the same, and a time domain interval between any two adjacent reference signals in the plurality of reference signals is less than one radio frame.

The terminal device performs channel measurement based on the plurality of reference signals.

In an optional implementation, the terminal device may receive first reference signals and a second reference signal. Initial values of sequences of the plurality of first reference signals are all the same, and an initial value of a sequence of the second reference signal is different from the initial values of the sequences of the first reference signals. When the second reference signal is a CSI-RS, an initial value of a pseudo-random sequence of the second reference signal may satisfy the formula (1). When the second reference signal is a DMRS, an initial value of a pseudo-random sequence of the second reference signal may satisfy the formula (2).

The terminal device may use the first reference signals and the second reference signal to perform joint channel estimation or channel measurement.

For specific descriptions of the plurality of reference signals, refer to the descriptions of the network device side.

Optionally, the terminal device may receive first indication information from the network device. The first indication information indicates a format of time-frequency resources to which the plurality of reference signals are mapped.

In addition to performing channel measurement or channel estimation by using reference signals in the conventional technology, the terminal device may further perform joint channel measurement or channel estimation by using the reference signals designed in this embodiment of this application, so as to improve accuracy of channel measurement/estimation by the terminal device, and enhance communication performance of the terminal device.

It can be understood that, in the foregoing embodiments, the method and/or the steps implemented by the network device or the terminal device may alternatively be implemented by a component (for example, a chip or a circuit) that may be used in the network device or the terminal device.

An embodiment of this application further provides a communication apparatus. The communication apparatus is configured to implement the foregoing methods. The communication apparatus may be the network device in the foregoing method embodiments, or an apparatus including the foregoing network device, or a component that may be used in the network device. It can be understood that, to implement the foregoing functions, the communication apparatus includes a corresponding hardware structure and/or software module for performing each function. A person skilled in the art should easily be aware that, in combination with units and algorithm steps in the examples described in embodiments disclosed in this specification, this application can be implemented by hardware or a combination of hardware and computer software.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 12 is a diagram of a structure of a communication apparatus 1200. The communication apparatus 1200 includes a sending module 1201 and a receiving module 1202. The sending module 1201 may also be referred to as a sending unit. The sending module 1201 is configured to implement a sending function. The receiving module 1202 may also be referred to as a receiving unit. The sending module 1201 and the receiving module 1202 may be, for example, a transceiver circuit, a transceiver, or a communication interface.

When the communication apparatus 1200 is a network device, the sending module 1201 is configured to send a plurality of reference signals. Initial values of sequences of the plurality of reference signals are the same, and a time domain interval between any two adjacent reference signals in the plurality of reference signals is less than one radio frame.

The receiving module 1202 is configured to receive echo signals of the plurality of reference signals.

FIG. 13 is a diagram of a structure of a communication apparatus 1300. The communication apparatus 1300 includes a receiving module 1301 and a processing module 1302. The receiving module 1202 may also be referred to as a receiving unit, and the receiving module 1202 may be, for example, a transceiver circuit, a transceiver, or a communication interface.

When the communication apparatus 1200 is a network device, the sending module 1201 is configured to send a plurality of reference signals. Initial values of sequences of the plurality of reference signals are the same, and a time domain interval between any two adjacent reference signals in the plurality of reference signals is less than one radio frame.

The receiving module 1202 is configured to receive echo signals of the plurality of reference signals.

In this embodiment, the communication apparatus 1200 is presented in a form of functional modules obtained through integration. A "module" herein may be a specific ASIC, a circuit, a processor that executes one or more software or firmware programs, a memory, an integrated logic circuit, and/or another component capable of providing the foregoing function.

In a simple embodiment, a person skilled in the art may figure out that the communication apparatus 1200 and the communication apparatus 1300 may be in a form of a communication apparatus 1400 shown in FIG. 14.

For example, a processor 1401 in the communication apparatus shown in FIG. 14 may invoke computer-executable instructions stored in a memory 1402, to enable the communication apparatus 1400 to perform the resource reservation methods in the foregoing method embodiments. Specifically, the functions/implementation processes of the sending module 1201 and the receiving module 1202 in FIG. 12 may be implemented by the processor 1401 in the communication apparatus 1400 shown in FIG. 14 by invoking the computer-executable instructions stored in the memory 1402. A function/an implementation process of a processing module 1402 in FIG. 14 may be implemented by the processor 1401 in a terminal device shown in FIG. 14 by invoking the computer-executable instructions stored in the memory 1402.

The communication apparatuses 1200 to 1400 provided in embodiments may perform the foregoing signal sending method or signal receiving method. Therefore, for technical effects that can be achieved by the communication apparatuses 1200 to 1400, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, which are stored in a memory. A processor may be configured to execute the program instructions and implement the foregoing method processes. The processor may be built into a SoC (system on chip) or an ASIC, or may be an independent semiconductor chip. In addition to a core that is configured to execute software instructions to perform operations or processing, the processor may further include a necessary hardware accelerator, such as a field programmable gate array (field programmable gate array, FPGA), a programmable logic device (programmable logic device, PLD), or a logic circuit that implements dedicated logic operations.

When the foregoing modules or units are implemented by using hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software, to perform the foregoing method processes.

Optionally, an embodiment of this application further provides a chip system, including at least one processor and an interface. The at least one processor is coupled to a memory by using the interface. When the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in this embodiment of this application.

Optionally, an embodiment of this application further provides a communication system, including the network device and the terminal device in the foregoing method embodiments.

All or some of the foregoing embodiments may be implemented by using software, hardware, firmware, or any combination thereof. When a software program is used to implement embodiments, all or some of embodiments may be implemented in a form of a computer program product.

This application provides a computer program product, including one or more computer instructions. When the one or more computer instructions are run on a communication apparatus, any method in embodiments of this application is performed.

When the computer program instructions are loaded and executed on a computer, all or some of the procedures or functions according to embodiments of this application are generated. The computer may be a general-purpose computer, a dedicated computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and the accompanying drawings are merely example descriptions of this application defined by the appended claims, and are considered as having covered any of and all of modifications, variations, combinations, or equivalents within the scope of this application. If these modifications and variations made to this application fall within the scope of the claims of this application and equivalent technologies thereof, this application is also intended to cover these modifications and variations.

**Claims**

1. A signal sending method, comprising:

    sending a plurality of reference signals, wherein initial values of sequences of the plurality of reference signals are the same, and a time domain interval between any two adjacent reference signals in the plurality of reference signals is less than one radio frame; and
    receiving an echo signal of at least one of the plurality of reference signals.

2. The method according to claim 1, wherein
    an initial value of a pseudo-random sequence of the reference signal is determined based on a physical layer cell identity.

3. The method according to claim 2, wherein
the initial value of the pseudo-random sequence of the reference signal satisfies:

$$c_{init} = \left(2^{10}\left(2N_{ID}^{cell} + 1\right) + N_{ID}^{cell}\right)mod 2^{31},$$

wherein $c_{init}$ indicates the initial value, and $N_{ID}^{cell}$ is the physical layer cell identity.

4. The method according to claim 1, wherein
an initial value of a pseudo-random sequence of the reference signal is determined based on at least a smallest time domain interval between the reference signals, wherein the smallest time domain interval is a smallest value of time domain intervals between adjacent reference signals in the plurality of reference signals.

5. The method according to claim 4, wherein
the initial value of the pseudo-random sequence of the reference signal is

$$c_{init} = \left(2^{10}\left(\left(N_{symb}^{slot}n_{s,f}^{\mu} + l\right)mod\, T + 1\right)\left(2N_{ID}^{cell} + 1\right) + N_{ID}^{cell}\right)mod 2^{31}$$ , wherein $c_{init}$ indicates

the initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and *l* is an index of an OFDM symbol for the reference signal in a slot.

6. The method according to any one of claims 1 to 5, wherein
the reference signal is a channel state information-reference signal.

7. The method according to claim 4, wherein
the initial value of the pseudo-random sequence of the reference signal is

$$c_{init} = \left(2^{17}\left(\left(N_{symb}^{slot}n_{s,f}^{\mu} + l\right)mod\, T + 1\right)\left(2N_{ID}^{cell} + 1\right) + 2N_{ID}^{cell}\right)mod\, 2^{31}$$ , wherein $c_{init}$ indicates

the initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and *l* is an index of an OFDM symbol for the reference signal in a slot.

8. The method according to claim 7, wherein
the reference signal is a demodulation reference signal.

9. The method according to any one of claims 5 to 8, wherein

$$N_{symb}^{slot}N_{s,f}^{\mu} mod\, T = 0,$$

wherein $N_{s,f}^{\mu}$ is a quantity of slots in a radio frame.

10. The method according to any one of claims 4 to 9, wherein

the plurality of reference signals occupy a plurality of symbols, indexes of the plurality of symbols belong to a first set, and the first set satisfies R={T×e+z|e∈S,S⊆{0,1,2,...}}, wherein
R indicates the first set, T indicates the smallest time domain interval between the reference signals, z is an integer greater than or equal to 0, and S indicates a second set, wherein the second set is a subset of a natural number set.

11. The method according to any one of claims 1 to 10, wherein
the reference signal occupies time-frequency resources in a first format, and positions of the time-frequency resources in the first format are $\{(k_0, l_0), (k_0 + 2, l_0), (k_0 + 4, l_0), (k_0 + 6, l_0), (k_0 + 8, l_0), (k_0 + 10, l_0)\}$ in a slot and a resource block, wherein $k_0$ is an index of a subcarrier in the resource block, $l_0$ is an index of a symbol in the slot, and the resource block comprises 12 subcarriers.

12. The method according to claim 11, wherein

a quantity of ports supported by the reference signal is 1;
a frequency domain density of the reference signal on first time-frequency resources is 6, wherein the frequency domain density is a quantity of resource elements occupied by the reference signal per resource block per port; and
a code division multiplexing type supported by the reference signal is no code division multiplexing.

13. The method according to claim 11 or 12, wherein the method further comprises:
sending first indication information, wherein the first indication information indicates the first format.

14. A signal receiving method, comprising:

receiving a plurality of reference signals, wherein initial values of sequences of the plurality of reference signals are the same, and a time domain interval between any two adjacent reference signals in the plurality of reference signals is less than one radio frame; and
performing channel measurement based on the plurality of reference signals.

15. The method according to claim 14, wherein
an initial value of a pseudo-random sequence of the reference signal is determined based on a physical layer cell identity.

16. The method according to claim 15, wherein
the initial value of the pseudo-random sequence of the reference signal satisfies:

$$c_{\text{init}} = \left(2^{10}\left(2N_{\text{ID}}^{\text{cell}} + 1\right) + N_{\text{ID}}^{\text{cell}}\right)\text{mod}2^{31},$$

wherein $c_{\text{init}}$ is the initial value, and $N_{\text{ID}}^{\text{cell}}$ is the physical layer cell identity.

17. The method according to claim 14, wherein
an initial value of a pseudo-random sequence of the reference signal is determined based on at least a smallest time domain interval between the reference signals, wherein the smallest time domain interval is a smallest value of time domain intervals between adjacent reference signals in the plurality of reference signals.

18. The method according to claim 17, wherein
the initial value of the pseudo-random sequence of the reference signal is
$$c_{\text{init}} = \left(2^{10}\left(\left(N_{\text{symb}}^{\text{slot}}n_{\text{s,f}}^{\mu} + l\right)\text{mod } T + 1\right)\left(2N_{\text{ID}}^{\text{cell}} + 1\right) + N_{\text{ID}}^{\text{cell}}\right)\text{mod}2^{31}$$ , wherein $c_{\text{init}}$ indicates
the initial value, $N_{\text{symb}}^{\text{slot}}$ is a quantity of symbols in a slot, $n_{\text{s,f}}^{\mu}$ is a number of a slot for the reference signal in
a radio frame, $N_{\text{ID}}^{\text{cell}}$ is a physical layer cell identity, T is the smallest time domain interval between the reference signals, and $l$ is an index of an OFDM symbol for the reference signal in a slot.

19. The method according to any one of claims 14 to 18, wherein
the reference signal is a channel state information-reference signal.

20. The method according to claim 17, wherein
the initial value of the pseudo-random sequence of the reference signal is
$$c_{\text{init}} = \left(2^{17}\left(\left(N_{\text{symb}}^{\text{slot}}n_{\text{s,f}}^{\mu} + l\right)\text{mod } T + 1\right)\left(2N_{\text{ID}}^{\text{cell}} + 1\right) + 2N_{\text{ID}}^{\text{cell}}\right)\text{mod } 2^{31}$$ , wherein $c_{\text{init}}$ indicates

the initial value, $N_{symb}^{slot}$ is a quantity of symbols in a slot, $n_{s,f}^{\mu}$ is a number of a slot for the reference signal in a radio frame, $N_{ID}^{cell}$ is a physical layer cell identity, T is the smallest time domain interval between the reference signals, and *l* is an index of an OFDM symbol for the reference signal in a slot.

21. The method according to claim 20, wherein
the reference signal is a demodulation reference signal.

22. The method according to any one of claims 18 to 21, wherein

$$N_{symb}^{slot} N_{s,f}^{\mu} \bmod T = 0,$$

wherein $N_{s,f}^{\mu}$ is a quantity of slots in a radio frame.

23. The method according to any one of claims 17 to 22, wherein

the plurality of reference signals occupy a plurality of symbols, indexes of the plurality of symbols belong to a first set, and the first set satisfies R={T×e+z|e∈S,S⊆{0,1,2,...}}, wherein
R indicates the first set, T indicates the smallest time domain interval between the reference signals, z is an integer greater than or equal to 0, and S indicates a second set, wherein the second set is a subset of a natural number set.

24. The method according to any one of claims 14 to 23, wherein
the reference signal occupies time-frequency resources in a first format, and positions of the time-frequency resources in the first format are $\{(k_0, l_0), (k_0 + 2, l_0), (k_0 + 4, l_0), (k_0 + 6, l_0), (k_0 + 8, l_0), (k_0 + 10, l_0)\}$ in a slot and a resource block, wherein $k_0$ is an index of a subcarrier in the resource block, $l_0$ is an index of a symbol in the slot, and the resource block comprises 12 subcarriers.

25. The method according to claim 24, wherein

a quantity of ports supported by the reference signal is 1;
a frequency domain density of the reference signal is 6, wherein the frequency domain density is a quantity of resource elements occupied by the reference signal per resource block per port; and
a code division multiplexing type supported by the reference signal is no code division multiplexing.

26. The method according to claim 25, wherein the method further comprises:
receiving first indication information, wherein the first indication information indicates the first format.

27. A signal sending apparatus, comprising one or more modules, wherein the one or more modules are configured to perform the steps in the method according to any one of claims 1 to 13.

28. A signal receiving apparatus, comprising one or more modules, wherein the one or more modules are configured to perform the steps in the method according to any one of claims 14 to 26.

29. A signal sending apparatus, comprising at least one processor, wherein the processor is configured to execute instructions stored in a memory, and when the instructions are executed by the at least one processor, the method according to any one of claims 1 to 13 is implemented.

30. A signal receiving apparatus, comprising at least one processor, wherein the processor is configured to execute instructions stored in a memory, and when the instructions are executed by the at least one processor, the method according to any one of claims 14 to 26 is implemented.

31. A computer-readable storage medium, wherein the computer-readable storage medium stores instructions, and when the instructions are executed by a computer, the method according to any one of claims 1 to 13 is implemented.

32. A computer-readable storage medium, wherein the computer-readable storage medium stores instructions, and when the instructions are executed by a computer, the method according to any one of claims 14 to 26 is implemented.

Network
device

Sensing
signal

Echo
signal

Communication

Terminal
device

Target

(a)

Network
device A

Network
device B

Sensing
signal

Echo
signal

Communication

Terminal
device

Target

(b)

FIG. 1

FIG. 2

FIG. 3

SINR

FIG. 4

FIG. 5

First time period

6    13    20    27    34    41    48        76    83    90    97    104   111   118

FIG. 6

First time period

4  6    13  18  20   27      34      41      48        76      83      90      97      104     111     118

Second reference signal          First reference signal

FIG. 7

SINR

FIG. 8

Time-domain symbol

FIG. 9

1st part      2nd part      3rd part      4th part

x[0]   x[1]   x[2]   x[3]   x[4]   x[5]   x[6]   x[7]   x[8]   x[9]   x[10]   x[11]

(a)

Sensing signal    X   X   X   X

Echo signal 1    X   X   X   X

Echo signal 2    X   X   X   X

Detection interval

(b)

FIG. 10

1st part      2nd part

x[0]   x[1]   x[2]   x[3]   x[4]   x[5]   x[6]   x[7]   x[8]   x[9]   x[10]   x[11]

FIG. 11

Communication apparatus

Sending module 1201

Receiving module 1202

1200

**FIG. 12**

Communication apparatus

Receiving module 1301

Processing module 1302

1300

**FIG. 13**

1400

Processor 1401

Memory 1402

**FIG. 14**

## INTERNATIONAL SEARCH REPORT

International application No.

**PCT/CN2023/134833**

### A. CLASSIFICATION OF SUBJECT MATTER

G01S13/10(2006.01)i; G01S13/02(2006.01)i; H04W72/0446(2023.01)i

According to International Patent Classification (IPC) or to both national classification and IPC

### B. FIELDS SEARCHED

Minimum documentation searched (classification system followed by classification symbols)

IPC: G01S H04W

Documentation searched other than minimum documentation to the extent that such documents are included in the fields searched

Electronic data base consulted during the international search (name of data base and, where practicable, search terms used)

OETXT; CNTXT; WPABSC; ENTXTC; VEN; DWPI; WPABS; 3GPP; IEEE: 参考信号, 感测信号, 感应信号, 感知信号, 序列, 初始值, 间隔, 时隙, 时域, 相邻, 帧, 相同, 一样, 一致, DMRS, CSI-RS, CSI RS, sensing signal?, perceptual signal?, reference signal?, adjacent, interval, identical, same, uniform, sequenc?, seperat+

### C. DOCUMENTS CONSIDERED TO BE RELEVANT

| Category* | Citation of document, with indication, where appropriate, of the relevant passages | Relevant to claim No. |
|---|---|---|
| A | CN 114402222 A (HUAWEI TECHNOLOGIES CO., LTD.) 26 April 2022 (2022-04-26) description, paragraphs [0147] and [0185]-[0198] | 1-32 |
| A | CN 115280176 A (HUAWEI TECHNOLOGIES CO., LTD.) 01 November 2022 (2022-11-01) entire document | 1-32 |
| A | WO 2022011492 A1 (QUALCOMM INC. et al.) 20 January 2022 (2022-01-20) entire document | 1-32 |
| A | HUAWEI et al. "On Cross-link Interference Coordination for Duplexing Flexibility" *3GPP TSG RAN WG1 NR Ad Hoc Meeting R1-1700096*, 09 January 2017 (2017-01-09), section 2.3 | 1-32 |
| A | ZTE et al. "Channel Sensing Based Schemes for Cross-link Interference Mitigation in NR" *3GPP TSG RAN WG1 Meeting #88 R1-1701617*, 07 February 2017 (2017-02-07), section 3.2 | 1-32 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 January 2024** | **28 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134833**

| Patent document cited in search report | | | Publication date (day/month/year) | Patent family member(s) | | | Publication date (day/month/year) |
|---|---|---|---|---|---|---|---|
| CN | 114402222 | A | 26 April 2022 | WO | 2021047279 | A1 | 18 March 2021 |
| | | | | EP | 4022351 | A1 | 06 July 2022 |
| | | | | EP | 4022351 | A4 | 19 October 2022 |
| | | | | US | 2021076367 | A1 | 11 March 2021 |
| CN | 115280176 | A | 01 November 2022 | EP | 4107542 | A1 | 28 December 2022 |
| | | | | EP | 4107542 | A4 | 09 August 2023 |
| | | | | WO | 2021180210 | A1 | 16 September 2021 |
| | | | | US | 2021286045 | A1 | 16 September 2021 |
| | | | | US | 11474197 | B2 | 18 October 2022 |
| | | | | US | 2023112477 | A1 | 13 April 2023 |
| WO | 2022011492 | A1 | 20 January 2022 | US | 2023300805 | A1 | 21 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211584425